# EUROPEAN PATENT SPECIFICATION

(11) **EP 1 834 970 B1**
(45) Date of publication and mention of the grant of the patent: **14.05.2014**
(21) Application number: 07104009.1
(22) Date of filing: 13.03.2007
(51) Int. Cl.: C08F 293/00, C08F 297/00, C08F 297/02

(54) **A process for producing polyolefin-polyvinylaromatic-block copolymers**
Ein Verfahren zur Herstellung von Polyolefin-Polyvinylaromatischen-Blockcopolymeren
Un procédé pour la production des copolymères à blocs basés sur les polyoléfines et polystyrènes.

(30) Priority: 15.03.2006 EP 06111149
(43) Date of publication of application: 19.09.2007
(73) Proprietor: Styrolution GmbH, 60325 Frankfurt am Main (DE)
(72) Inventor: Steininger, Helmut, 67551, Worms (DE); Knoll, Konrad, 68199, Mannheim (DE); Mülhaupt, Rolf, 79117, Freiburg (DE); Weiser, Marc-Stephan, 89233, Neu-Ulm (DE)
(74) Representative: Jacobi, Markus Alexander

(56) References cited:
- EP-A- 0 965 603
- EP-A2- 0 423 101
- WO-A-01/42314
- WO-A-98/09999
- US-A- 4 310 639
- US-A- 4 365 045
- US-A- 5 945 491
- US-A1- 5 834 557
- US-A1- 2001 047 064
- US-B1- 6 248 837

## Description

The present invention relates to a process for producing block copolymers comprising at least one polyolefin block and at least one polyvinylaromatic block by sequential polymerization of olefin monomers and vinylaromatic monomers, with an isotactic structure in the polystyrene block.

Group IV metal catalysts have proven to be excellent reagents for the preparation of polyolefins of high stereoselectivity at very high activities. Post-metallocene group IV metal complexes as catalysts for living olefin polymerisation have been of great research interest in recent years. Living polymerisation enables the access to very high molecular weight polymers of low molecular mass distribution, controlled reaction conditions and the sequential synthesis of block copolymers.

Copolymers of ethylene and styrene with styrene contents up to 6.7 mol-% using zirconium bispyridimine and alkoxyimine catalysts are describes in JP-A 2001-048909 and JP-A 2003-342326.

Random ethylene/styrene interpolymers, which can be polymerized in the presence of indenyl complexes of Zirconium or Titanium, such as Dimethylsilyl(indenyl)(t-butyl-amido)TiC1₂ are known i. e. from WO 98/09999.

Styrene-butadiene block copolymers with a high syndiotactic polystyrene block are obtained by polymerization in the presence of homoleptic lanthanoid compounds (DE-A 103 49 481). They can be hydrogenated in a separate step using a hydrogenation catalyst. US 4 310 639, US 6 248 837, and US 4 365 045 disclose processes for block copolymers which can comprise olefin/styrene units formed in the presence of group IV metal catalysts.

Styrenic block copolymers with ethylene and propylene are usually prepared using living anionic polymerisation of styrene and butadiene or isoprene, respectively, followed by hydrogenation of the remaining double bonds of the butadiene. They typically consist of a phase separated structure of hard polystyrene blocks and a soft, rubber-like block and, therefore, are an important class of thermoplastic elastomers in which the hard and brittle properties of polystyrene are combined with the soft and elastic properties of the polyolefin. Due to the pendant vinyl groups formed during 1,2-insertion of butadiene pure block copolymers of styrene and ethylene cannot be obtained even after hydration of the double bonds.

Alternative routes to block copolymers of polyolefins and poly(styrene) often consist of different polymerisation procedures, combined by a mechanism of active site transformation, or the synthesis of macromonomers, including several purification steps. A direct synthesis was studied on rare earth metal catalysts, which have only low activities and are not of economic significance.

It is an object of the present invention to find a simple process for producing block copolymers comprising at least one polyolefin block and at least one polyvinylaromatic block with an isotactic structure, which can be carried in a single reactor without changing the catalyst for polymerization of each block or the need for an additional hydrogenation step.

We have found that this object is achieved by a process for producing block copolymers comprising at least one polyolefin block and at least one polyvinylaromatic block with an isotactic structure by sequential polymerization of olefin monomers and vinylaromatic monomers, wherein the polymerization of the olefin monomers and the vinylaromatic monomers is carried out in the presence of a group IV metal complex of a phenoximine as catalyst.

Suitable catalysts and there preparation are described in EP-A 874 005. The catalyst may contain Titanium (Ti), zirconium (Zr) or Hafnium (Hf) as group IV metal and one or more phenoximine as chelating ligands. The metal is preferably in the oxidation state +IV and comprises further ligands, such as chloro- fluoro- or jodo-ligands. Preference is given to a Titanium (IV) complex comprising one or two phenoximine as chelating ligands, such as Bis-(N-(3',5'-diiodo-salicylidene)-2,6-difluoroaniline)-titanium(IV)-dichloride, Bis-(N-(3'-tert-butyl-salicylidene)-2,6-difluoro-aniline)-titanium(IV)-dichloride, Bis-(N-(3'-trimethylsilyl-salicylidene)-2,6-difluoro-aniline)-titanium(IV)-dichloride or Bis-(N-(3'-cumyl-salicylidene)-2,6-difluoro-aniline)-titanium(IV)-dichloride. Most preferably (Bis-(N-(3',5'-diiodo-salycylidene)-2,6-diflouroaniline)-titanium(IV)-dichloride) is used as catalyst.

Usually the catalyst is used together with a Lewis acid as cocatalyst. Preference is given to using a cocatalyst which contains no ionically bound halogen. Examples of suitable cocatalysts are open-chain or cyclic aluminoxane compounds, such as methylaluminoxane (MAO), boranes, preferably phenylboranes substituted by fluorine or fluoroalkyl groups, e.g. tris(pentafluorophenyl)borane, and borate, such as tetrakis-(pentafluorophenyl)borate of noncoordinating counterions, preferably N,N-dimethyl-anilinium.

The catalyst is generally used in a molar ratio of from 1: 100.000 to 1: 1000, based on the metal of the catalyst to the monomers.

The molar ratio of catalyst to cocatalyst is generally from 1: 0.5 to 1: 10.000, preferably from 1:20 to 1:5.000.

Ethylene and/or propylene are preferably used as olefin monomer. Suitable vinylaromatic monomers are, for example, styrene, α-methylstyrene, p-methylstyrene, ethylstyrene, tert.-butylstyrne, vinyltoluene or 1,1-diphyenylethylene or mixtures thereof. Styrene is preferred as vinylaromatic monomer.

Living olefin polymerisation can work as a new synthetic route to the preparation of block copolymers of the type PE-block-PS. These block copolymers can be obtained by sequential monomer addition starting from the synthesis of the polyethylene block. When [Bis-(N-(3',5'-diiodo-salicylidene)-2,6-difluoroaniline)-titanium(IV)-dichloride/MAO is used high molar mass polymers of narrow molar mass distribution can be obtained. After polymerisation of the first block, the gaseous monomers are removed from the reaction mixture and styrene is added. Longer polymerisation times are generally needed for the synthesis of the poly(styrene) block. If not all polyethylene chains initiate styrene block copolymerisation, a blend of the blockcopolymer and the polyolefin will be obtained. Generally the polystyrene block produced according to the present invention has isotactic structure. At high styrene concentrations atactic poly(styrene) is formed as a side product. It can be fully removed from the polymer blend by Soxhlet extraction with tBME.

If the styrene content is low, i. e. below 4.5 mol-% for high molecular weight polymers the solubility and crystallisation behaviour of the block copolymer does not differ significantly from the pure PE. TEM images show a micro-phase separation between domains of pure PE and block copolymer micelles of diameters ranging from 10 to 65 nm, embedded into a PE matrix.

With the process of the present invention it is possible to obtain the olefin/styrene block copolymers in a one-pot synthesis. For lower molar mass block copolymers, up to 23 weight-% of styrene incorporation is possible. A reactor blend of the block copolymer and homo-PE, or P(E-co-P) respectively, may be obtained. In situ formed block copolymers are effective blend compatibilizers, which improve the dispersion and interfacial adhesion of the immiscible PE and PS blend components. The new one-pot catalytic route and catalytic slurry block copolymerization affords high molar mass block copolymers which are not feasible in the conventional two step styrene/diene solution polymerization combined with subsequent hydrogenation due to viscosity build-up problems encountered when dissolving high molecular weight block copolymers.

With the process of the present invention block copolymer with the structure PE-block-PS or P(E-co-P)-block-PS are obtained by sequential monomer addition during the living polymerization, i.e. ethylene or a mixture of ethylene and propylene followed by the addition of styrene. The phenoxyimine catalyst (Bis-(N-(3',5'-diiodo-salicylidene)-2,6-difluoroaniline)-titanium(IV)-dichloride) was tailored to produce high molecular weight block copolymers containing both, polyolefin and polystyrene segments. According to chromatographic analysis and TEM morphology studies blends of block copolymers and PE homopolymers (or P(E-co-P), respectively) are formed. The living olefin/styrene block on phenoxyimine catalysts represents an attractive new one-pot synthetic route to styrenic block copolymers, which are usually only obtainable by anionic styrene/diene block copolymerisation followed by hydrogenation. The living olefin/styrene block copolymerisation accounted for very high molar masses of the resulting block copolymers.

The block copolymers produced by the process of the present invention can be used for shoe soles, toys, sporting equipment and as additives in several formulated products like adhesives and coatings. Both, diblock and triblock copolymers can be used as compatibilizers in polymer blends. Diblock copolymers can also be used for improving the wettability of surfaces.

### Examples

### Solvents and chemicals:

Toluene was distilled from sodium/potassium, heptane was distilled from sodium. Both were kept under argon. All other solvents were lab-grade and used as received. Ethylene (3.0) and propene (2.5) were obtained by Messer-Griesheim. Styrene (Sigma-Aldrich Chemicals) was distilled over calcium hydride. Irganox 1010 was used obtained by Ciba and used as a stabilizer. Methylaluminoxane was purchased as solution in toluene (10% g/v; 5.24 wt % Al) at Crompton GmbH. The synthesis and characterisation of the catalyst precursor [Bis-(N-(3',5'-diiodo-salicylidene)-2,6-difluoroaniline)-titanium(IV)-dichloride (1)] was produced according to e-Polymers 2005, no.E_002MACRO 2004 and M.-S. Weiser, M. Wesolek, R. Mülhaupt; A new phenoxyimine catalyst for living polymerisation of ethylene and propene; J. Organomet. Chem.; 2006. Other phenoxyimine catalysts were purchased at MCat GmbH.

### Characterisations:

High temperature NMR spectra were recorded on a Bruker ARX 300 spectrometer (299.87 MHz) using the solvent peaks as reference for 1 H-spectra and 13C-spectra at 120°C. High temperature size exclusion chromatography was carried out on a PL-220 using a triple column set (PLgel mixed-bed) and 1,2,4-trichlorobenzene containing 2 mg/mL of an sterically hindered phenol (Irganox® 1010 from Ciba) as stabilizer as solvent at 145°C. Molecular mass distributions were analysed by light scattering, viscosimetry and refractional index. Calibration was carried out against linear PS standards. Glass transition temperatures and melting points of the obtained polymers were detected using a Seiko 6200.

Transmission Electron Microscopy (TEM) experiments were performed with a LEO EM 912 Omega (120 kV). The sample were cut using a Diatome diamond knife at -45°C using a ultramicrotome (Ultracut E, Reichert & Jung) equipped with a cryochamber. Samples were stained using RuO4.

A CRYSTAF apparatus, model 200 from PolymerChar S. A., was used for fractionation. Samples (20 mg) were dissolved in 30 ml of distilled 1,2-dichlorobenzene at 160 °C. After dissolution, the temperature was decreased at a rate of 0.1 °C/min.

The prototype of a high temperature gradient HPLC system PL XT-200 (Polymer Laboratories) was used. The stationary phase was LiChrosorb 100. The column outlet was connected with a customized evaporative light scattering detector (ELSD, model PL-ELS 1000, Polymer Laboratories) working at a nebulization temperature of 160 °C, an evaporation temperature of 270 °C and with an air velocity of 1.5 L/min. The eluent flow rate was 1 mL/min. A robotic sample handling system PL-XTR (Polymer Laboratories) was applied for sample preparation and injection. The column compartment was set to 140 °C, the injection port and transfer line between the chromatograph and the auto sampler was set to 150 °C, while the temperature of the sample block and the tip of the robotic arm was 160 °C. For data collection and processing the software package "WinGPC-Software" (Polymer Standards Service GmbH) was used. Decalin was used as mobile phase during injection. During elution mode the solvent was changed to cyclohexanon using a linear gradient.

### Examples 1 to 4:

PE-block-PS was synthesised in a 200 mL Büchi Miniclave reactor using 120 mL of toluene and styrene monomer in total. The polymerisation of the ethylene block was carried out at 25°C at 2 bar. MAO was used as cocatalyst, using a ratio of Ti/Al = 1:2,500. The reactor was filled with toluene and a part of the amount of cocatalyst needed and thermostated to 25°C. 7.5 µmol of the catalyst were dissolved in toluene and activated by the remaining amount of MAO. The solution of the activated catalyst was injected by syringe. Then the polymerisation was started by feed of ethylene. After a certain period of time styrene was added and the atmosphere in the reactor was evaporated to 0.2 bar and flushed with argon for several times. The reaction mixture was heated to 50°C and stirred for further 6 hours. Then the reactor was depressurised and the reactor content was drained and the polymer was precipitated by pouring the reaction mixture in methanol/aq. HCl (5% v/v)/few mg of Irganox® 1010. The polymer was filtered, washed with methanol and dried in vacuo over night at 60°C.

The following phenoxyimine catalysts were used for the syntheses of PE-block-PS block copolymers:
(1): Bis-(N-(3',5'-diiodo-salicylidene)-2,6-difluoroaniline)-titanium(IV)-dichloride
(2): Bis-(N-(3'-tert-butyl-salicylidene)-2,6-difluoro-aniline)-titanium(IV)-dichloride
(3): Bis-(N-(3'-trimethylsilyl-salicylidene)-2,6-difluoro-aniline)-titanium(IV)-dichloride
(4): Bis-(N-(3'-cumyl-salicylidene)-2,6-difluoro-aniline)-titanium(IV)-dichloride (Cumyl =C(CH3)2-C6H5)

Table 1 gives an overview on the results obtained for the variation of the catalyst. All experiments were carried out using similar conditions. Only the polymerisation time for the first block varied between three and five minutes.

**Table 1 : Syntheses of PE-block-PS block copolymers ^{a).}**

| Example | 1 | 2 | 3 | 4 |
|---|---|---|---|---|
| catalyst | (1) | (2) | (3) | (4) |
| polymerisation times / min. b) | 3 | 5 | 5 | 3 |
| mol-% styrene c) | 2.4 | 3 | 7.5 | 2 |
| Weight-% styrene c) | 8 | 11 | 23 | 7 |
| Mn (kg/mol) c) | 735 | 170 | 120 | 180 |
| Mw / Mn c) | 1.6 | 1.2 | 1.2 | 1.3 |
| Mn (kg/mol) (1st block) d) | 670 | 150 | 90 | 165 |
| Mn (kg/mol) (2nd block) d) | 65 | 20 | 30 | 15 |
| Tm / °C c) | 135 | 135 | 135 | 135 |
| ΔHm/J/g c) | 101 | 173 | 162 | 156 |
| Conversion of styrene / % e) | 0.7 | 1.0 | 0.6 | 0.6 |
| Weight-% of aPS f) | 6 | 35 | 8 | 11.5 |

| | | | | |
|---|---|---|---|---|
| a) 62.5 µmol/L catalyst, 80 mL toluene, MAO: Al/Ti = 2,500:1, RT, 2 bar ethylene, afterwards: 40 mL styrene (2.9 mol/L), 50°C, 6h. catalyst 1: Bis-(N-(3',5'-diiodo-salicylidene)-2,6-difluoroaniline)-titanium(IV)-dichloride b) Polymerisation time for the polyethylene block. c) after extraction of aPS. d) block lengths calculated from GPC results and styrene content (1 H-NMR). e) total conversion of sytrene including formation of the side product. f) determined by extraction of aPS using tert-butylmethylether. | | | | |

In all experiments atactic poly(styrene) is formed as a side product due to thermal autopolymerisation. The product can be purified by Soxhlet extraction using tert-butylmethylether. The atactic polystyrene can be totally separated as neither polyethylene nor the block copolymer are soluble in boiling tBME. CRYSTAF experiments show, that after extraction no more soluble compounds are detected. The rectangular peak detected at 29°C is missing, the concentration of the polymer in solution drops down to 0. The same result is obtained in HT-gradient HPLC20 elution. Chromatograms of the purified sample do not show the peak at an elution volume of 2.9 mL, which is typical for poly(styrene). Polyethylene and the block copolymer are eluted at 1.7 mL in both cases.

TEM images have been taken of several purified samples to analyse morphologies of the obtained polymers. Due to staining with RuO4 styrene containing domains resemble dark. The images of all samples show, that a phase separation of different morphologies is present. It can be distinguished between very homogeneous and smooth domains consisting of pure polyethylene and areas in which micelles of the block copolymer are visible. This gives a good proof that a blend of polyethylene and the block copolymer are present in the sample. During the polymerisation of the second block, a polymerisation of styrene will take place only at some of the polyethylene chains.

The micelles in the image show diameters below 65 nm. The statistical average size of the micelles is 23.3 nm. The distribution can be fitted to a Gauss plot with an R² value of 0.89. The maximum of the Gauss plot is giving a diameter of 21.6 nm.

The values from the DSC analyses in Table 1 show, that the poly(styrene) has no significant effect on the melting point of the polyethylene block. The length of the PS block seems to be to low. Due to the low incorporation of styrene big domains of polyethylene can be formed, so that only very low influence on the crystallinity can be observed. All samples show narrow polydispersity indices of 1.2 < Mw / Mn < 1.7, showing that only short PS blocks are formed, as styrene is not polymerised onto all polyethylene chains obtained from the syntheses of the first block.

In case of block copolymer synthesis on Bis-(N-(3',5'-diiodo-salicylidene)-2,6-difluoroaniline)-titanium(IV)-dichloride /MAO ultra-high molecular weight block copolymers with number-average molar mass Mn > 600 kg/mol and styrene block lengths of Mn > 40 kg/mol were obtained. In addition, the amount of side product formed during block copolymerisation on Bis-(N-(3',5'-diiodo-salicylidene)-2,6-difluoroaniline)-titanium(IV)-dichloride/MAO was the lowest for all phenoxyimine catalysts studied.

### Examples 5 to 9:

A variation of the styrene concentration was performed using Bis-(N-(3',5'-diiodosalicylidene)-2,6-difluoroaniline)-titanium(IV)-dichloride /MAO as the catalyst to avoid formation of the aPS side product. Results of these experiments are shown in Table 2.

**Table 2: Variation of the styrene concentration during syntheses of PE-block-PS.**

| Example | 5 | 6 | 7 | 8 | 9 |
|---|---|---|---|---|---|
| c (styrene) / mol/L | 4.3 | 2.9 | 1.9 | 1.5 | 2.9 |
| temperature / °C b) | 50 | 50 | 50 c | 50 | RT |
| mol-% styrene d) | 4.5 | 2.4 | 1.0 | 2.2 | 0 |
| weight-% styrene d) | 15 | 8 | 3.6 | 7 | 0 |
| Mn (kg/mol) d) | 630 | 735 | 900 | 600 | 390 |
| Mw / Mn d) | 1.8 | 1.6 | 1.5 | 1.5 | 1.7 |
| Mn (kg/mol) (1 st block) e) | 540 | 670 | 850 | 560 | 390 |
| Mn (kg/mol) (2nd block) e) | 90 | 65 | 50 | 40 | 0 |
| Tm / °C d) | 135 | 135 | 134 | 136 | 137 |
| ΔHm/J/gd) | 117 | 101 | 117 | 118 | 133 |
| weight-% aPS | 13 | 6 | 11 | 0 | 6 |

| | | | | | |
|---|---|---|---|---|---|
| a) 62.5 µmol/L Bis-(N-(3',5'-diiodo-salicylidene)-2,6-difluoroaniline)-titanium(IV)-dichloride; 120 mL total amount of solvent after styrene addition; MAO: Al/Ti = 2,500:1; 2 bar ethene (RT, 3 min.); afterwards: addition of 15 - 60 mL styrene (6 h). b) polymerisation temperature for the poly(styrene) block. c) polymerisation temperature for the polyethylene block: 50°C. d) values taken after Soxhlet extraction of aPS. e) block lengths calculated from GPC results and styrene content (1 H-NMR). | | | | | |

The results in Table 2 show that a maximum of 4.5 mol-% styrene can be incorporated in the product. Therefore, "semi-bulk" conditions (styrene/toluene = 1:1, vol.-%) have to be chosen for the synthesis of the second block (example 5, Table 2). Simultaneously a higher amount of atactic poly(styrene) is formed as a side product. The formation of the side product can be suppressed in case of lower styrene concentration (example 7, Table 2). It cannot be suppressed in case of lower polymerisation temperature. As can be seen from example 9 in Table 2, no heating for the synthesis of the second block leads to formation of 6 weight-% of atactic PS, but no formation of block copolymer. In all other cases a blend of polyethylene and the block copolymer is obtained.

### Example 10 to 14

P(E-co-P)-block-PS was synthesised in a 1,600 mL Parr polymerisation reactor (Multipurpose polymerisation reactor) from Labeq AG using a constant flow of the monomer gas mixture to insure constant conditions for the preparation of the first block (random copolymer of ethylene and propene). Polymerisation of the first block was carried out at 25°C, in 500 mL of toluene at 2 bar. MAO was used as cocatalyst, using a ratio Ti/AI = 1:2,500. The reactor was filled with toluene and a part of the amount of cocatalyst. Then the atmosphere was saturated with 2 bar of the desired gas mixture of ethylene and propylene and the reactor was thermostated to 25°C. 15 µmol (16.3 mg) of 1 were dissolved in few mL of toluene and activated by the remaining amount of MAO. The solution of the activated catalyst was injected by syringe using a slight argon overpressure. After a certain period of time, styrene was added and the atmosphere in the reactor was evaporated to 0.2 bar for several times and flushed with argon. The reactor was heated to 50°C and the reaction mixture was stirred for further 5 hours. Then the reactor was depressurised and the reactor content was drained and the polymer was precipitated by pouring the reaction mixture in methanol/aq. HCl (5% v/v)/few mg of Irganox 1010. The polymer was filtered, washed with methanol and dried in vacuo over night at 60°C.

Studies towards the synthesis of P(E-co-P)-block-PS - block copolymers were carried out in the same matter. Bis-(N-(3',5'-diiodo-salicylidene)-2,6-difluoroaniline)-titanium(IV)-dichloride /MAO was used for the preparation of the block copolymers to afford high propylene contents and high molar mass of the first block. A lower concentration of styrene was chosen to avoid formation of the side product. The results are shown in Table 3.

**Table 3: Syntheses of P(E-co-P)-block-PS on Bis-(N-(3',5'-diiodo-salicylidene)-2,6-difluoroaniline)-titanium(IV)-dichloride /MAO.**

| Example | 10 | 11 | 12 | 13 | 14 |
|---|---|---|---|---|---|
| mol-% propylene (polymer) b) | 50 | 40 | 25 | 23 | 14 |
| mol-% styrene (polymer) b) | 2 | 1 | 1 | 2 | 4 |
| weight-% styrene (total) c) | 25 | 3 | 3 | 6 | 23 |
| Mn (kg/mol) | 700 | 900 | 1,100 | 1,000 | 1,200 |
| Mw/Mn | 1.5 | 1.5 | 1.7 | 1.7 | 1.8 |
| Mn (kg/mol) (1 st block) | 640 | 870 | 1,090 | 920 | 1,050 |
| Mn (kg/mol) (2nd block) | 60 | 30 | 10 | 80 | 150 |
| Tg / °C | -49 | -56 | -51 | -51 | d |

| | | | | | |
|---|---|---|---|---|---|
| a) 30 µmol/L Bis-(N-(3',5'-diiodo-salicylidene)-2,6-difluoroaniline)-titanium(IV)-dichloride, 500 mL toluene, MAO: Al/Ti = 2,500:1, 2 bar ethylene/propylene (25°C, 6 min.), then: 80 mL styrene (1.4 mol/L; 50°C, 5 h). b) determined by 1H-NMR, relative to P(E-co-P) - block. c) determined by 1H-NMR, relative to total product. d) broad melting point at 62.7°C. | | | | | |

P(E-co-P)-block-PS - block copolymers were obtained in blend with P(E-co-P). Polymers of ultra-high molar mass are obtained (Mn > 700 kg/mol). Even at low styrene concentration of 1.4 mol/L atactic polystyrene is formed as a side product in example 10 and 14. The atactic polystyrene gives a characteristic signal in SEC analyses (Mn = 4000 - 5500 g/mol). Differently from the PE-block-PS - block copolymer samples, it cannot be separated from the crude product by Soxhlet extraction as due to the high propylene content the full sample is soluble in boiling tBME. The effect of the atactic PS can be seen in TEM morphology studies, as significantly larger domains of PS are present. The diameter of the PS micelles is in the range of 120 nm to 300 nm due to atactic PS enclosed by the block copolymer. In the polymers obtained by example 11 to 13 without formation of aPS side product no clear PS domains formed due to low styrene incorporation.

## Claims

1. A process for producing blockcopolymers with an isotactic structure in the polystyrene block comprising at least one polyolefin block and at least one polyvi-nylaromatic block by sequential polymerization of olefin monomers and vinylaromatic monomers, wherein the polymerization of the olefin monomers and the vi-nylaromatic monomers is carried out in the presence of a group IV metal complex of a phenoximine as catalyst.

2. A process as defined in claim 1, wherein the group IV metal is Ti, Zr or Hf.

3. A process as defined in claim 1, wherein Bis-(N-(3',5'-diiodo-salicylidene)-2,6-difluoroaniline)-titanium(IV)-dichloride, Bis-(N-(3'-tert-butyl-salicylidene)-2,6-difluoro-aniline)-titanium(IV)-dichloride, Bis-(N-(3'-trimethylsilyl-salicylidene)-2,6-difluoro-aniline)-titanium(IV)-dichloride or Bis-(N-(3'-cumyl-salicylidene)-2,6-difluoro-aniline)-titanium(IV)-dichloride is used as catalyst.

4. A process as defined in claim 1 to 3, wherein the polymerization is carried out in the presence of a Lewis acid as cocatalyst.

5. A process as defined in claim 4, wherein the cocatalyst comprises an open-chain or cyclic aluminoxane compound, a borane or a borate.

6. A process as defined in claim 1 to 6, wherein ethylene and/or propylene is used as olefin monomer and styrene is used as vinylaromatic monomer.

## Patentansprüche

1. Verfahren zur Herstellung von Blockcopolymeren mit isotaktischer Struktur im Polystyrolblock, umfassend mindestens einen Polyolefinblock und mindestens einen Polyvinylaromatenblock, durch sequentielle Polymerisation von Olefinmonomeren und Vinylaromatmonomeren, wobei die Polymerisation der Olefinmonomere und Vinylaromatmonomere in Gegenwart eines Gruppe-IV-Metall-Komplexes eines Phenoximins als Katalysator durchgeführt wird.

2. Verfahren nach Anspruch 1, bei dem es sich bei dem Gruppe-IV-Metall um Ti, Zr oder Hf handelt.

3. Verfahren nach Anspruch 1, bei dem Bis(N-(3',5'-diisodsalicyliden)-2,6-difluoranilin)titan(IV)-dichlorid, Bis(N-(3'-tert.-butyl-salicyliden)-2,6-difluoranilin)titan(IV)-dichlorid, Bis(N-(3'-tri-methylsilylsalicyliden)-2,6-difluoranilin)titan-(IV)-dichlorid oder Bis(N-(3'-cumylsalicyliden)-2,6-difluoranilin)titan(IV)-dichlorid als Katalysator verwendet wird.

4. Verfahren nach Anspruch 1 bis 3, bei dem die Polymerisation in Gegenwart einer Lewis-Säure als Cokatalysator durchgeführt wird.

5. Verfahren nach Anspruch 4, bei dem der Cokatalysator eine offenkettige oder cyclische Aluminoxanverbindung, ein Boran oder ein Borat umfasst.

6. Verfahren nach Anspruch 1 bis 6, bei dem Ethylen und/oder Propylen als Olefinmonomer verwendet wird und Styrol als Vinylaromatmonomer verwendet wird.

## Revendications

1. Procédé de production de copolymères à blocs avec une structure isotactique dans le bloc de polystyrène comprenant au moins un bloc polyoléfinique et au moins un bloc polyvinylaromatique par polymérisation séquentielle de monomères oléfiniques et de monomères vinylaromatiques, la polymérisation des monomères oléfiniques et des monomères vinylaromatiques étant réalisée en présence d'un complexe de métal du groupe IV d'une phénoximine comme catalyseur.

2. Procédé selon la revendication 1, dans lequel le métal du groupe IV est Ti, Zr ou Hf.

3. Procédé selon la revendication 1, dans lequel le dichlorure de bis-(N-(3',5'-diiodo-salicylidène)-2,6-difluoroaniline)-titane(IV), le dichlorure de bis-(N-(3'-tert-butyl-salicylidène)-2,6-difluoroaniline)-titane(IV), le dichlorure de bis-(N-(3'-triméthylsilyl-salicylidène)-2,6-difluoroaniline)-titane(IV) ou le dichlorure de bis-(N-(3'-cumyl-salicylidène)-2,6-difluoroaniline)-titane(IV) est utilisé comme catalyseur.

4. Procédé selon les revendications 1 à 3, dans lequel la polymérisation est réalisée en présence d'un acide de Lewis comme cocatalyseur.

5. Procédé selon la revendication 4, dans lequel le cocatalyseur comprend un composé d'aluminoxane à chaîne ouverte ou cyclique, un borane ou un borate.

6. Procédé selon les revendications 1 à 6, dans lequel l'éthylène et/ou le propylène sont utilisés comme monomère oléfinique et le styrène est utilisé comme monomère vinylaromatique.
